# EUROPEAN PATENT APPLICATION

(11) **EP 3 328 063 A1**
(43) Date of publication of application: **30.05.2018**
(21) Application number: 17176310.5
(22) Date of filing: 16.06.2017
(51) Int. Cl.: H04N 5/232, H04N 5/225

(54) **CONTROL METHOD, CONTROL DEVICE AND ELECTRONIC DEVICE**

(30) Priority: 29.11.2016 CN 201611079499
(71) Applicant: Guangdong Oppo Mobile Telecommunications Corp., Ltd., Dongguan, Guangdong 523860 (CN)
(72) Inventor: LI, Longjia, Dongguan, Guangdong 523860 (CN)
(74) Representative: Romano, Giuseppe

(57) **Abstract**

The present disclosure provides a control method, a control apparatus and an electronic device. The method includes: controlling the displayer to display a cached wide-angle image output by the wide-angle camera as a preview image; processing a user input of the input device to determine whether to zoom the preview image; determining whether a predetermined condition is satisfied during zooming the preview image; starting the telephoto camera and controlling the displayer to display a cached telephoto image output by the telephoto camera as the preview image when the predetermined condition is satisfied.

## Description

### FIELD

The present disclosure relates to the imaging technology field, and more particularly, to a control method, a control device and an electronic device.

### BACKGROUND

In the related art, a camera of a mobile phone realizes zooming in an image by digital zoom, which mainly cropping and stretching the image, thus resulting in a poor image quality.

### SUMMARY

The control method according to embodiments of the present disclosure is applied for controlling an electronic device. The electronic device includes an imaging device, a displayer and an input device. The imaging device includes a wide-angle camera and a telephoto camera. A field of view of the telephoto camera is within a field of view of the wide-angle camera. The control method includes: controlling the displayer to display a cached wide-angle image output by the wide-angle camera as a preview image; processing a user input of the input device to determine whether to zoom the preview image; determining whether a predetermined condition is satisfied during zooming the preview image; starting the telephoto camera and controlling the displayer to display a cached telephoto image output by the telephoto camera as the preview image when the predetermined condition is satisfied.

In at least one embodiment, determining whether a predetermined condition is satisfied during zooming the preview image includes: determining whether a zoom ratio exceeds a predetermined zooming-in threshold during zooming the preview image, the predetermined zooming-in threshold being less than a ratio of an angle of view of the wide-angle camera to an angle of view of the telephoto camera.

In at least one embodiment, determining whether a predetermined condition is satisfied during zooming the preview image includes: determining whether an angle of view of the wide-angle camera is less than a predetermined angle of view during zooming the preview image, the predetermined angle of view being less than a maximum angle of view of the telephoto camera.

In at least one embodiment, the control method further includes: closing the wide-angle camera after a predetermined period of time from starting the telephoto camera.

In at least one embodiment, before controlling the displayer to display a cached wide-angle image output by the wide-angle camera as a preview image, the control method further includes: starting the wide-angle camera and closing the telephoto camera.

In at least one embodiment, zooming the cached wide-angle image includes: cropping the cached wide-angle image based on a zoom ratio to obtain a cropped image; stretching and zooming in the cropped image for being displayed on the displayer, to acquire a stretched and cropped image; and controlling the displayer to display the cropped and stretched image.

In at least one embodiment, closing the wide-angle camera comprises keeping the wide-angle camera in a power-on state without performing operations.

In at least one embodiment, closing the telephoto camera comprises keeping the telephoto camera in a power-on state without performing operations.

The control device according to embodiments of the present disclosure is applied for controlling an electronic device. The electronic device includes an imaging device, a displayer and an input device. The imaging device includes a wide-angle camera and a telephoto camera. A field of view of the telephoto camera is within a field of view of the wide-angle camera. The control device includes a first control module, a first determining module, a second determining module, and a second control module. The first control module is configured to control the displayer to display a cached wide-angle image output by the wide-angle camera as a preview image. The first determining module is configured to process a user input of the input device to determine whether to zoom the preview image. The second determining module is configured to determine whether a predetermined condition is satisfied during zooming the preview image. The second control module is configured to start the telephoto camera and to control the displayer to display a cached telephoto image output by the telephoto camera as the preview image when the predetermined condition is satisfied.

In at least one embodiment, the second determining module includes: a first determining unit, configured to determine whether a zoom ratio exceeds a predetermined zooming-in threshold during zooming the preview image, the predetermined zooming-in threshold being less than a ratio of an angle of view of the wide-angle camera to an angle of view of the telephoto camera.

In at least one embodiment, the second determining module includes: a second determining unit, configured to determine whether an angle of view of the wide-angle camera is less than a predetermined angle of view during zooming the preview image, the predetermined angle of view being less than a maximum angle of view of the telephoto camera.

In at least one embodiment, the control device further includes a closing module, configured to close the wide-angle camera after a predetermined period of time from starting the telephoto camera.

In at least one embodiment, the control device further includes: a switching module, configured to start the wide-angle camera and to close the telephoto camera.

In at least one embodiment, the second determining module includes: a cropping unit, configured to crop the cached telephoto image based on the zoom ratio to obtain a cropped image; a stretching unit, configured to stretch and zoom in the cropped image for being displayed on the displayer, so as to acquire a stretched and cropped image; and a control unit, configured to control the displayer to display the cropped and stretched image.

In at least one embodiment, the closing module is further configured to close the wide-angle camera to keep the wide-angle camera in a power-on state without performing operations.

In at least one embodiment, the switching module is further configured to close the telephoto camera to keep the telephoto camera in a power-on state without performing operations.

The electronic device according to the embodiments of the present disclosure includes an input device, a displayer, an imaging device and the control device described above.

In at least one embodiment, the electronic device includes a mobile phone or a tablet computer.

In at least one embodiment, the imaging device includes front dual cameras or rear dual cameras.

In at least one embodiment, an angle of view of the wide-angle camera is from 70 degree to 90 degree, and an angle of view of the telephoto camera is from 20 degree to 60 degree.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a flow chart of a control method in at least one embodiment of the present disclosure;
Fig. 2 is a schematic diagram illustrating functional modules of an electronic device in at least one embodiment of the present disclosure;
Fig. 3 is a schematic diagram illustrating an imaging device in at least one embodiment of the present disclosure;
Fig. 4 is a schematic diagram illustrating functional modules of an electronic device in at least one embodiment of the present disclosure;
Fig. 5 is a flow chart of a control method in at least one embodiment of the present disclosure;
Fig. 6 is a schematic diagram illustrating functional modules of an electronic device in at least one embodiment of the present disclosure;
Fig. 7 is a flow chart of another control method in at least one embodiment of the present disclosure;
Fig. 8 is a schematic diagram illustrating functional modules of an electronic device in at least one embodiment of the present disclosure;
Fig. 9 is a schematic diagram illustrating an angle of a wide-angle camera during zooming in at least one embodiment of the present disclosure;
Fig. 10 is a flow chart of another control method in at least one embodiment of the present disclosure;
Fig. 11 is a schematic diagram illustrating functional modules of an electronic device in at least one embodiment of the present disclosure;
Fig. 12 is a flow chart of another control method in at least one embodiment of the present disclosure;
Fig. 13 is a schematic diagram illustrating functional modules of an electronic device in at least one embodiment of the present disclosure;
Fig. 14 is a flow chart of zooming a cached wide-angle image in at least one embodiment of the present disclosure; and
Fig. 15 is a schematic diagram illustrating functional modules of an electronic device in at least one embodiment of the present disclosure.

### DETAILED DESCRIPTION

Embodiments of the present disclosure will be described in detail in the following descriptions, examples of which are shown in the accompanying drawings, in which the same or similar elements and elements having same or similar functions are denoted by like reference numerals throughout the descriptions. The embodiments described herein with reference to the accompanying drawings are explanatory and illustrative, which are used to generally understand the present disclosure. The embodiments shall not be construed to limit the present disclosure.

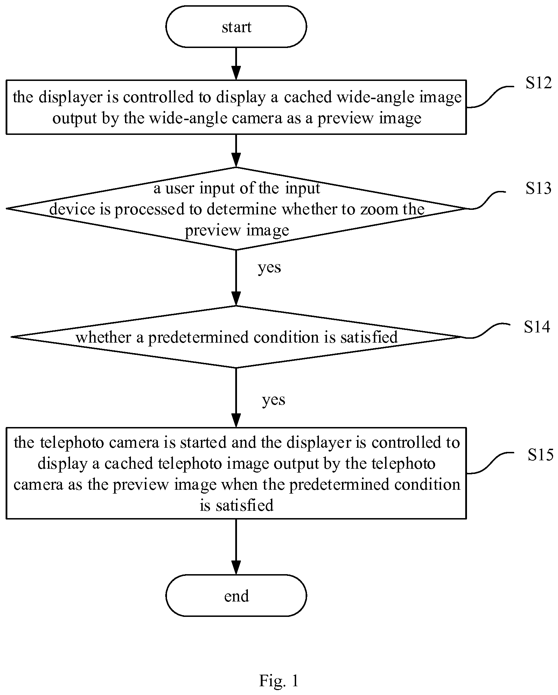

Fig. 1 illustrates a control method in an at least one embodiment of the present disclosure. As shown in Fig. 1, a control method provided in at least one embodiment of the present disclosure is applied for controlling an electronic device. The electronic device includes an imaging device, a displayer and an input device. The imaging device includes a wide-angle camera and a telephoto camera. A field of view of the telephoto camera is within a field of view of the wide-angle camera. The control method may include followings.

At block S12, the displayer is controlled to display a cached wide-angle image output by the wide-angle camera as a preview image.

At block S 13, a user input of the input device is processed to determine whether to zoom the preview image.

At block S 14, it is determined whether a predetermined condition is satisfied during zooming the preview image.

At block S15, the telephoto camera is started and the displayer is controlled to display a cached telephoto image output by the telephoto camera as the preview image when the predetermined condition is satisfied.

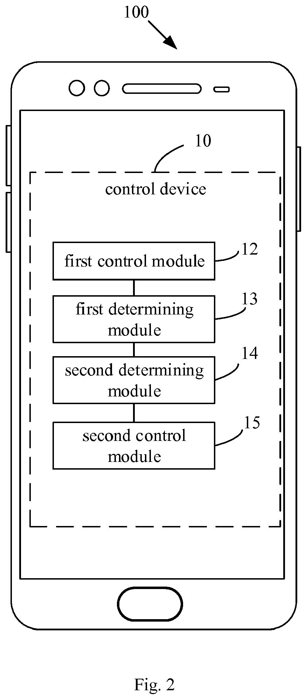

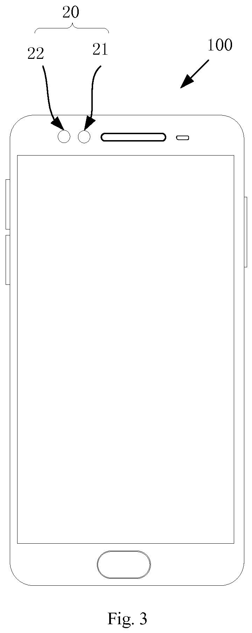

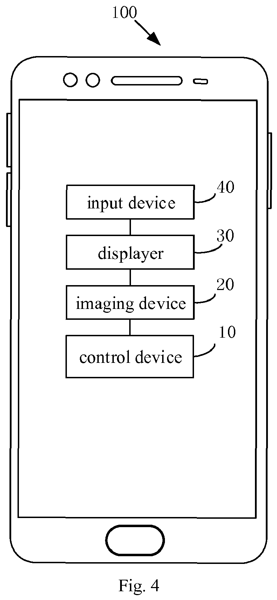

Fig. 2 illustrates functional modules of an electronic device in at least one embodiment of the present disclosure. Fig. 3 illustrates an imaging device in at least one embodiment of the present disclosure. Fig. 4 illustrates functional modules of an electronic device in at least one embodiment of the present disclosure. As shown in Figs. 2, 3 and 4, the control method provided in the embodiments of the present disclosure may be realized by a control device 10 provided in embodiments of the present disclosure.

The control device 10 provided in the embodiments of the present disclosure is applied for controlling an electronic device 100. The electronic device 100 includes an imaging device 20, a displayer 30 and an input device 40. The imaging device 20 includes a wide-angle camera 21 and a telephoto camera 22. A field of view of the telephoto camera 22 is within a field of view of the wide-angle camera 21. The control device 10 includes a first control module 12, a first determining module 13, a second determining module 14, and a second control module 15. The first control module 12 is configured to control the displayer 30 to display a cached wide-angle image output by the wide-angle camera 21 as a preview image. The first determining module 13 is configured to process a user input of the input device 40 to determine whether to zoom the preview image. The second determining module 14 is configured to determine whether a predetermined condition is satisfied during zooming the preview image. The second control module 15 is configured to start the telephoto camera 22 and to control the displayer 30 to display a cached telephoto image output by the telephoto camera 22 as the preview image when the predetermined condition is satisfied. That is, block S12 may be realized by the first control module 12, block S13 may be realized by the first determining module 13, block S14 may be realized by the second determining module 14, and block S15 may be realized by the second control module 15.

The control device 10 provided in the embodiments of the present disclosure is applied in the electronic device 100 provided in the embodiments of the present disclosure. That is, the electronic device 100 provided in the embodiments of the present disclosure includes the control device 10. Certainly, the electronic device 100 provided in the embodiments of the present disclosure further includes an imaging device 20, a displayer 30 and an input device 40.

In at least one embodiment, the electronic device 100 may include a mobile phone or a tablet computer. Generally, there may be certain dimensional requirements both on a volume and a thickness of the imaging module due to demands of thinness and lightness for the overall design of the electronic device 100. Therefore, a single imaging module with optical zoom cannot be employed, and digital zoom may be used to simulate the optical zoom. With the digital zoom, the image is cropped and interpolation is performed between pixels in the cropped image, thereby resulting in an enlarged image with lower-resolution. Therefore, the electronic device 100 includes the control device 10 provided in at least one embodiment of the present disclosure, and the control device 10 provided in at least one embodiment of the present disclosure may simulate the optical zoom by switching the two cameras. In at least one embodiment, when the predetermined zooming-in threshold condition is satisfied, it is switched to the telephoto camera 22 from the wide-angle camera 21 to simulate the optical zoom.

In at least one embodiment, the imaging device 20 may include front dual cameras or rear dual cameras. In at least one embodiment, the wide-angle camera 21 and the telephoto camera 22 may be provided on the same side of the housing of the electronic device 100, such as both provided as the front cameras or the rear cameras. The two cameras are independent from each other.

In at least one embodiment, a field of view of the wide-angle camera 21 is larger than a field of view of the telephoto camera 22. An angle of view of the wide-angle camera 21 may be from 70 degree to 90 degree. An angle of view of the telephoto camera 22 may be from 20 degree to 60 degree.

The wide-angle camera 21 refers to a camera with a wide-angle lens, which generally has a shorter focal length and larger angle of view. The angle of the view of the wide-angle camera 21 in at least one embodiment of the present disclosure may be about 80 degree. The wide-angle camera 21 may be generally configured to capture close-range scenes.

The telephoto camera 22 refers to a camera with a telephoto lens, which generally has a longer focal length and a smaller angle of view. The angle of view of the telephoto camera 22 in at least one embodiment of the present disclosure may be about 40 degree. The telephoto camera 22 may be generally configured to capture long-range scenes. The telephoto camera 22 may take a clearer image when capturing the long-range scene.

In at least one embodiment, the wide-angle camera 21 usually may be a default camera. When the user captures, the cached wide-angle image may be output by the wide-angle camera 21 as the preview image. The user may want to perform a zooming operation on the preview image via the input device 40, i.e., change a zoom ratio of the preview image. In at least one embodiment, the displayer 30 and the input device 40 are integrated as a touch screen, such that the user may manipulate conveniently when previewing the image. For example, the user may perform an operation for zooming in or out the preview image by enlarging or decreasing a distance between two fingers on the touch screen. For the zooming operation, if the predetermined condition is satisfied, it is switched to the telephoto camera 22 from the wide-angle camera 21.

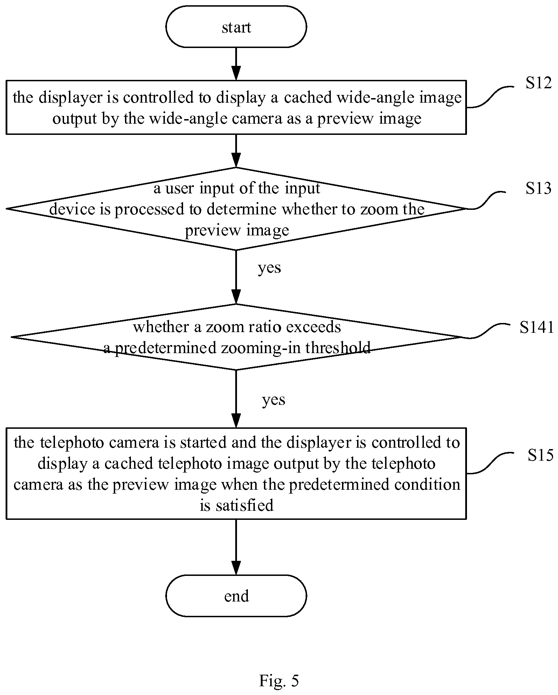

Fig. 5 illustrates a control method in an at least one embodiment of the present disclosure. As shown in Fig. 5, block 14 may be realized by block S 141.

At block S141, it is determined whether a zoom ratio exceeds a predetermined zooming-in threshold during zooming the preview image. The predetermined zooming-in threshold is less than a ratio of an angle of view of the wide-angle camera 21 to an angle of view of the telephoto camera 22.

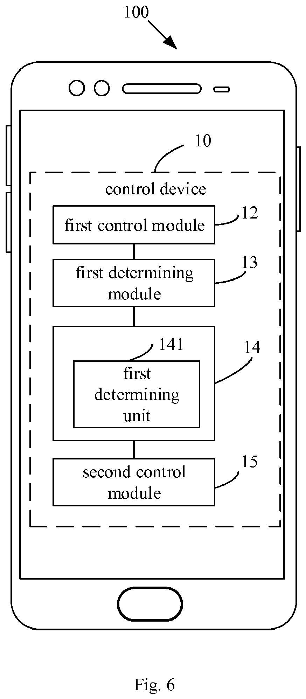

Fig. 6 illustrates functional modules of an electronic device in at least one embodiment of the present disclosure. As shown in Fig. 6, the second determining module 14 includes a first determining unit 141.

The first determining unit 141 is configured to determine whether a zoom ratio exceeds a predetermined zooming-in threshold during zooming the preview image, the predetermined zooming-in threshold being less than a ratio of an angle of view of the wide-angle camera 21 to an angle of view of the telephoto camera 22.

That is, block S141 may be realized by the first determining unit 141.

For example, if the angle of view of the wide-angle camera 21 is A initially, the angle of view of the wide-angle camera 21 becomes B that is less than A when the user zooms in the preview image, the zoom ratio may be A/B. If the predetermined zooming-in threshold is set to M, and M< A/C, where C is the maximum angle of view of the telephoto camera 22, the predetermined condition is satisfied when the zoom ratio A/B exceeds the predetermined zooming-in threshold M. In at least one embodiment, the zoom ratio may be obtained according to the initial preview image and the zoomed preview image.

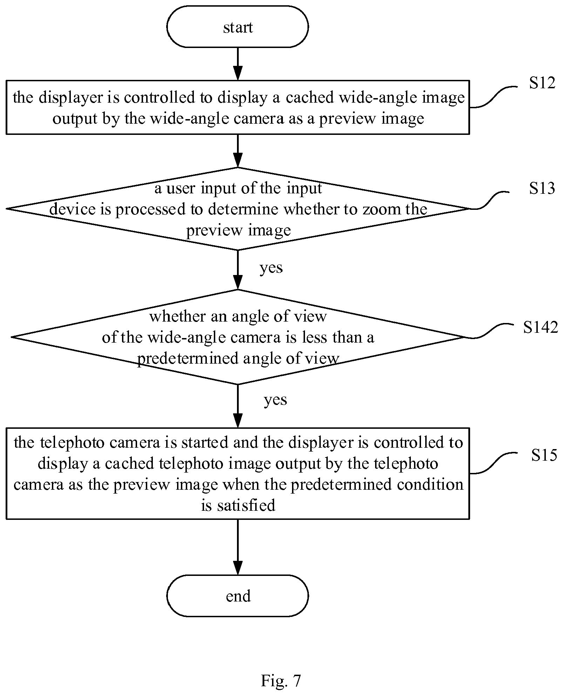

Fig. 7 illustrates a control method in an at least one embodiment of the present disclosure. As shown in Fig. 7, block 14 may be realized by block S142.

At block S142, it is determined whether an angle of view of the wide-angle camera is less than a predetermined angle of view during zooming the preview image. The predetermined angle of view is less than a maximum angle of view of the telephoto camera 22.

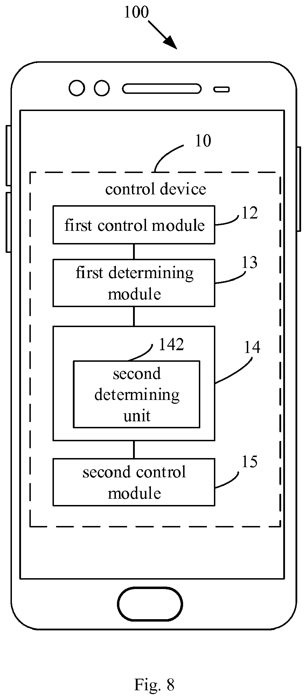

Fig. 8 illustrates functional modules of an electronic device in at least one embodiment of the present disclosure. As shown in Fig. 8, the second determining module 14 includes a second determining unit 142.

The second determining unit 142 is configured to determine whether an angle of view of the wide-angle camera 21 is less than a predetermined angle of view during zooming the preview image. The predetermined angle of view is less than a maximum angle of view of the telephoto camera 22.

That is, block S142 may be realized by the first determining unit 142.

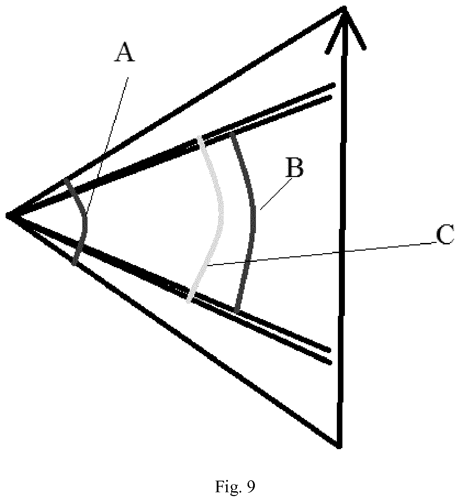

For example, as shown in Fig. 9, if the angle of view of the wide-angle camera 21 is A initially, the angle of view of the wide-angle camera 21 becomes smaller when the user zooms in the preview image, such as B. When the angle B of view is less than the predetermined angle of view, the predetermined condition is satisfied. The predetermined angle of view is less than the maximum angle C of view of the telephoto camera 22.

For the zooming operation, when the zoom ratio exceeds the predetermined zooming-in threshold or the angle of view of the wide-angle camera 21 is less than the predetermined angle of view, it is switched to the telephoto camera 22 from the wide-angle camera 21, and accordingly the cached image output by the telephoto camera 22 may be displayed on the displayer 30 as the preview image. In detail, when the wide-angle camera 21 is used to capture the scene, and when it is detected that the preview image of the wide-angle camera 21 is zoomed in, it may be switched to the telephoto camera 22, and the cached image output by the telephoto camera 22 may be used as the preview image.

In at least one embodiment of the present disclosure, the predetermined zooming-in threshold is less than a ratio of an angle of view of the wide-angle camera 21 to an angle of view of the telephoto camera 22. That is, when the predetermined zooming-in threshold is set to the ratio of the angle of view of the wide-angle camera 21 to the angle of view of the telephoto camera 22, and when the user clicks on the touch screen to zoom in the preview image, the telephoto camera 22 is started and the preview image switch may be performed only at a moment when the zoom ratio exceeds the predetermined zooming-in threshold (i.e. reaches the ratio of the angle of view of the wide-angle camera 21 to the angle of view of the telephoto camera 22). In this case, a short black screen may be caused and fluency of the image switching may be poor, since the telephoto camera 22 still needs to load capturing parameters. When the predetermined zooming-in threshold is less than the ratio of the angle of view of the wide-angle camera 21 to the angle of view of the telephoto camera 22, then the telephoto camera 22 may be started at background and load the capturing parameters when the zoom ratio exceeds the predetermined zooming-in threshold, such that the fluency of the image switching may be ensured and the user experience may be improved when it switches to the telephoto camera 22 when the zoom ratio reaches the ratio of the angel of view of the wide-angle camera 21 to the angle of view of the telephoto camera 22.

With the same reason, in at least one embodiment of the present disclosure, the predetermined angle of view is less than a maximum angle of view of the telephoto camera 22.

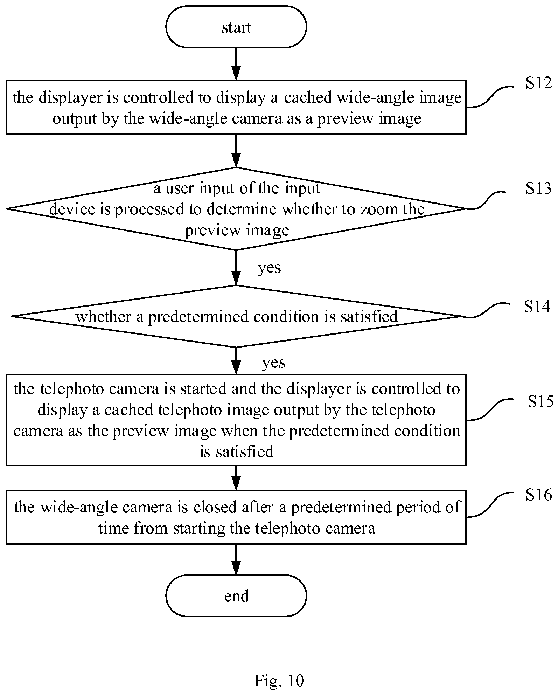

Fig. 10 illustrates a control method in an at least one embodiment of the present disclosure. As shown in Fig. 10, after block S15, the method further includes followings.

At block S16, the wide-angle camera is closed after a predetermined period of time from starting the telephoto camera.

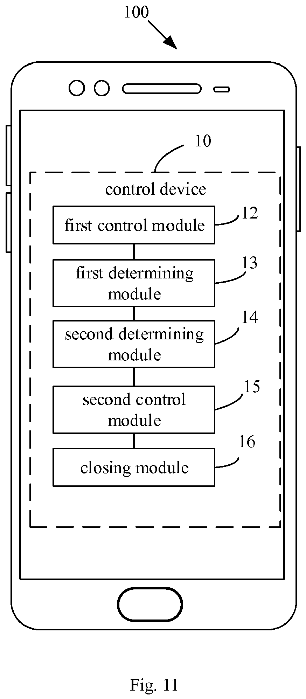

Fig. 11 illustrates functional modules of an electronic device in at least one embodiment of the present disclosure. As shown in Fig. 8, the instruction execution system is configured by the instructions to implement a closing module 16.

The closing module 16 is configured to close the wide-angle camera 22 after a predetermined period of time from starting the telephoto camera 21.

That is, block S16 may be realized by the closing module 16.

In at least one embodiment, closing herein should be broadly understood as keeping the wide-angle camera 21 in a power-on state without performing other operations such as setting capturing parameters or data acquisition.

In at least one embodiment of the present disclosure, when the zoom ratio of the preview image exceeds the predetermined zooming-in threshold or the angle of view of the wide-angle camera 21 is less than the predetermined angle of view, the telephoto camera 22 is started and it switches to the telephoto preview image from the wide-angle preview image. However, at this time, the wide-angle camera 21 is not closed immediately, but is set to a standby mode. It should be understood that, when the switching condition is satisfied, the telephoto camera 22 is started immediately, and if the wide-angle camera 21 is closed immediately at this moment, it needs to start the wide-angle camera 21 again and switch the preview image when the user performs a reverse operation (i.e. a zooming-out operation) immediately at this moment. Therefore, the wide-angle camera 21 may be closed after waiting for a predetermined period of time, which may make the switching transition of the cameras more natural and smooth, and avoid repeated switching between opening and closing states of different cameras.

In conclusion, the control method, the control device 10 and the electronic device 100 according to embodiments of the present disclosure may switch between different cameras timely to simulate optical zoom by determining the zoom ratio and the predetermined zooming-in threshold, thereby ensuring the image quality and enhancing the user experience.

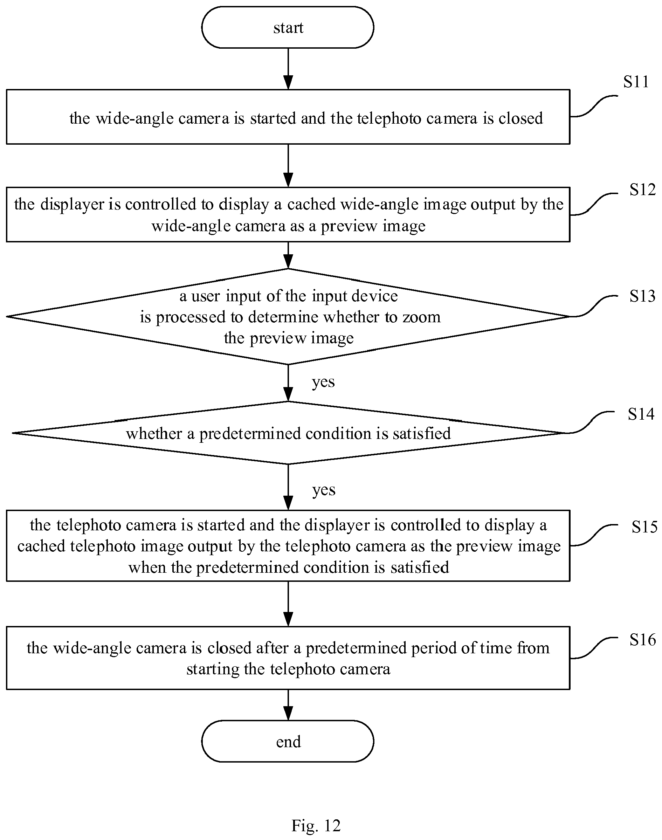

Fig. 12 illustrates a control method in an at least one embodiment of the present disclosure. As shown in Fig. 12, before block 12, the method further includes followings.

At block S11, the wide-angle camera 21 is started and the telephoto camera 22 is closed.

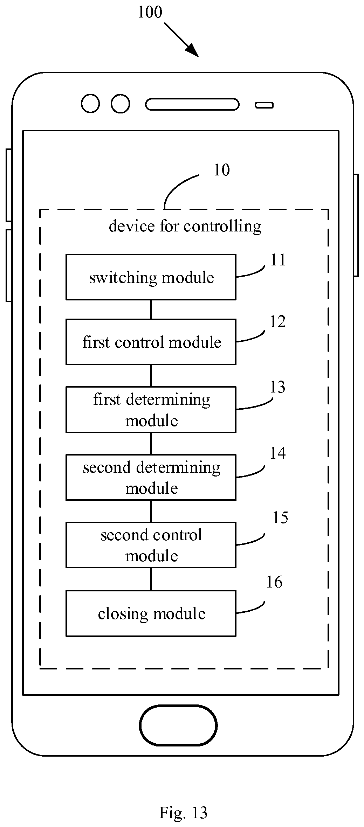

Fig. 13 illustrates functional modules of an electronic device in at least one embodiment of the present disclosure. As shown in Fig. 13, the instruction execution system is configured by the instructions to implement a switching module 11. The switching module 11 is configured to start the wide-angle camera 21 and to close the telephoto camera 22.

That is, block S11 may be realized by the switching module 11.

In at least one embodiment, closing herein should be broadly understood as keeping the telephoto camera 22 in a power-on state without performing other operations such as setting capturing parameters or data acquisition. Thus, when the switching condition is satisfied, the telephoto camera 21 may be quickly activated, thereby reducing a waiting time for the user and improving the user experience.

In at least one embodiment, the imaging device 20 is a higher power consumption module in the electronic device 100, so that power consumption for performing operations such as data acquisition or setting capturing parameter when both the two cameras are started is larger than that when a single camera is started. Therefore, when the wide-angle camera 21 is started, the telephoto camera 22 is in a standby state. When the switching condition is satisfied, the telephoto camera 22 in the standby state will be started and the wide-angle camera 21 will be in the standby mode. In this way, power consumption and resource occupation of the imaging device 20 may be reduced.

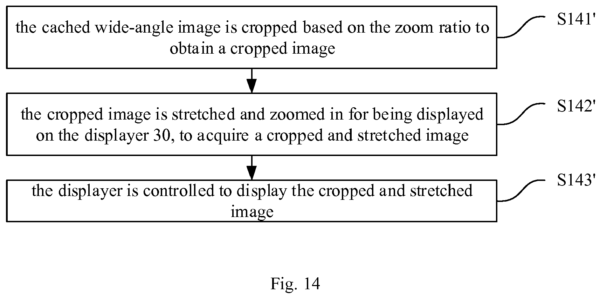

Fig. 14 illustrates a control method in an at least one embodiment of the present disclosure. As shown in Fig. 14, zooming the cached wide-angle image in block S 14 includes followings.

At block S141', the cached wide-angle image is cropped based on the zoom ratio to obtain a cropped image.

At block S142', the cropped image is stretched and zoomed in for being displayed on the displayer 30, to acquire a cropped and stretched image.

At block S 143', the displayer 30 is controlled to display the cropped and stretched image.

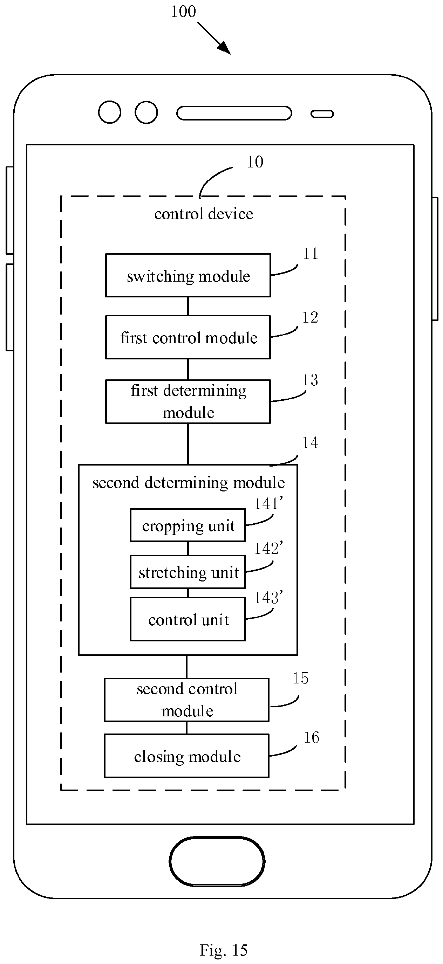

Fig. 15 illustrates functional modules of an electronic device in at least one embodiment of the present disclosure. As shown in Fig. 15, the second determining module 14 includes a cropping unit 141', a stretching unit 142' and a control unit 143'. The cropping unit 141' is configured to crop the cached wide-angle image based on the zoom ratio to obtain a cropped image. The stretching unit 142' is configured to stretch and zoom in the cropped image for being displayed on the displayer 30, to acquire a cropped and stretched image. The control unit 143' is configured to control the displayer 30 to display the cropped and stretched image.

That is, block S141' may be realized by the cropping unit 141', block S142' may be realized by the stretching unit 142', and block S143' may be realized by the control unit 143'.

It at least one embodiment, when it switches to the telephoto camera from the wide-angle camera during the zooming-in operation, since the angle of view becomes smaller, the image may be fluttered due to an instantaneous stretching change, and the user experience is poor. Therefore, in order to ensure fluency of the screen when switching between the wide-angle camera 21 and the telephoto camera 22, the telephoto camera 22 may be started when it is detected that the user zooms in the preview image of the wide-angle camera 21, and the wide-angle camera 21 may output the cached wide-angle image after the digital zoom as the preview image based on the natural optical imaging until the natural optical imaging can be performed by the telephoto camera 22, and then it may be transited to the natural optical imaging state of the telephoto camera 22, and the cached telephoto image output by the telephoto camera 22 may be used as the preview image.

In this way, the preview image switch may be performed smoothly during the switching from the wide-angle camera 21 to the telephoto camera 22.

Various embodiments and examples are provided in the above description to implement different structures of the present disclosure. In order to simplify the present disclosure, certain elements and settings will be described. However, these elements and settings are only by way of example and are not intended to limit the present disclosure. In addition, reference numerals may be repeated in different examples in the present disclosure. This repeating is for the purpose of simplification and clarity and does not refer to relations between different embodiments and/or settings. Furthermore, examples of different processes and materials are provided in the present disclosure. However, it would be appreciated by those skilled in the art that other processes and/or materials may be also applied.

Reference throughout this specification to "an embodiment," "some embodiments," "an illustrative embodiment", "an example," "a specific example," or "some examples," means that a particular feature, structure, material, or characteristic described in connection with the embodiment or example is included in at least one embodiment or example of the present disclosure. Thus, the indicative expressions of the above phrases are not necessarily referring to the same embodiment or example of the present disclosure. Furthermore, the particular features, structures, materials, or characteristics may be combined in any suitable manner in one or more embodiments or examples.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

It should be noted that, although the present disclosure has been described with reference to the embodiments, it will be appreciated by those skilled in the art that the disclosure includes other examples that occur to those skilled in the art to execute the disclosure. Therefore, the present disclosure is not limited to the embodiments.

## Claims

1. A control method, configured for controlling an electronic device, wherein the electronic device comprises an imaging device, a displayer and an input device, the imaging device comprises a wide-angle camera and a telephoto camera, a field of view of the telephoto camera is within a field of view of the wide-angle camera, and the method comprises:
controlling the displayer to display a cached wide-angle image output by the wide-angle camera as a preview image (S12);
processing a user input of the input device to determine whether to zoom the preview image (S 13);
determining whether a predetermined condition is satisfied during zooming the preview image (S14);
starting the telephoto camera and controlling the displayer to display a cached telephoto image output by the telephoto camera as the preview image when the predetermined condition is satisfied (S15).

2. The control method according to claim 1, wherein determining whether a predetermined condition is satisfied during zooming the preview image (S14) comprises:
determining whether a zoom ratio exceeds a predetermined zooming-in threshold during zooming the preview image, the predetermined zooming-in threshold being less than a ratio of an angle of view of the wide-angle camera to an angle of view of the telephoto camera (S 141);
or
determining whether an angle of view of the wide-angle camera is less than a predetermined angle of view during zooming the preview image, the predetermined angle of view being less than a maximum angle of view of the telephoto camera (S 141).

3. The control method according to claim 1 or 2, further comprising:
closing the wide-angle camera after a predetermined period of time from starting the telephoto camera (S16).

4. The control method according to any one of claims 1 to 3, before controlling the displayer to display a cached wide-angle image output by the wide-angle camera as a preview image (S12), further comprising:
starting the wide-angle camera and closing the telephoto camera (S11).

5. The control method according to any one of claims 1 to 4, wherein zooming the cached wide-angle image comprises:
cropping the cached wide-angle image based on a zoom ratio to obtain a cropped image (S141');
stretching and zooming in the cropped image for being displayed on the displayer, to acquire a stretched and cropped image (S142'); and
controlling the displayer to display the cropped and stretched image (S 143').

6. The control method according to claim 3 or 4, wherein closing the wide-angle camera comprises keeping the wide-angle camera in a power-on state without performing operations, and
closing the telephoto camera comprises keeping the telephoto camera in a power-on state without performing operations.

7. A control device, configured for controlling an electronic device, wherein the electronic device comprises an imaging device (20), a displayer (30) and an input device (40), the imaging device (20) comprises a wide-angle camera (21) and a telephoto camera (22), a field of view of the telephoto camera (22) is within a field of view of the wide-angle camera (21), and the control device comprises:
a first control module (12), configured to control the displayer to display a cached wide-angle image output by the wide-angle camera as a preview image;
a first determining module (13), configured to process a user input of the input device to determine whether to zoom the preview image;
a second determining module (14), configured to determine whether a predetermined condition is satisfied during zooming the preview image;
a second control module (15), configured to start the telephoto camera and to control the displayer to display a cached telephoto image output by the telephoto camera as the preview image when the predetermined condition is satisfied.

8. The control device according to claim 7, wherein the second determining module (14) comprises:
a first determining unit (141), configured to determine whether a zoom ratio exceeds a predetermined zooming-in threshold during zooming the preview image, the predetermined zooming-in threshold being less than a ratio of an angle of view of the wide-angle camera to an angle of view of the telephoto camera;
or
a second determining unit (142), configured to determine whether an angle of view of the wide-angle camera is less than a predetermined angle of view during zooming the preview image, the predetermined angle of view being less than a maximum angle of view of the telephoto camera.

9. The control device according to claim 7 or 8, further comprising:
a closing module (16), configured to close the wide-angle camera after a predetermined period of time from starting the telephoto camera.

10. The control device according to any one of claims 7 to 9, further comprising:
a switching module (11), configured to start the wide-angle camera and to close the telephoto camera.

11. The control device according to any one of claims 7 to 10, wherein the second determining module (14) comprises:
a cropping unit (141'), configured to crop the cached telephoto image based on the zoom ratio to obtain a cropped image;
a stretching unit (142'), configured to stretch and zoom in the cropped image for being displayed on the displayer, so as to acquire a stretched and cropped image; and
a control unit (143'), configured to control the displayer to display the cropped and stretched image.

12. The control device according to claim 9 or 10, wherein the closing module (16) is further configured to close the wide-angle camera to keep the wide-angle camera in a power-on state without performing operations; and the switching module (11) is further configured to close the telephoto camera to keep the telephoto camera in a power-on state without performing operations.

13. An electronic device, comprising:
an input device (40);
a displayer (30);
an imaging device (20); and
the control device (10) according to any one of claims 7 to 12.

14. The electronic device according to claim 13, wherein the electronic device comprises a mobile phone or a tablet computer and the imaging device (20) comprises front dual cameras or rear dual cameras.

15. The electronic device according to claim 13 or 14, wherein the imaging device (20) comprises a wide-angle camera (21) and a telephoto camera (22), and an angle of view of the wide-angle camera is from 70 degree to 90 degree, and an angle of view of the telephoto camera is from 20 degree to 60 degree.

## Amended claims

### Amended claims in accordance with Rule 137(2) EPC.

1. A control method, configured for controlling an electronic device, wherein the electronic device comprises an imaging device, a displayer and an input device, the imaging device comprises a wide-angle camera and a telephoto camera, a field of view of the telephoto camera is within a field of view of the wide-angle camera, and the method comprises:
controlling the displayer to display a cached wide-angle image output by the wide-angle camera as a preview image (S12);
processing a user input of the input device to determine whether to zoom the preview image (S13);
determining whether a predetermined condition is satisfied during zooming the preview image (S14), wherein the predetermined condition comprises a zoom ratio exceeding a predetermined zooming-in threshold, or an angle of view of the wide-angle camera being less than a predetermined angle of view;
starting the telephoto camera and controlling the displayer to display a cached telephoto image output by the telephoto camera as the preview image when the predetermined condition is satisfied (S15);
being **characterized in**:
closing the wide-angle camera after a predetermined period of time from starting the telephoto camera (S16).

2. The control method according to claim 1, the predetermined zooming-in threshold being less than a ratio of an angle of view of the wide-angle camera to an angle of view of the telephoto camera;
or
the predetermined angle of view being less than a maximum angle of view of the telephoto camera.

3. The control method according to any one of claims 1 to 2, before controlling the displayer to display a cached wide-angle image output by the wide-angle camera as a preview image (S12), further comprising:
starting the wide-angle camera and closing the telephoto camera (S11).

4. The control method according to any one of claims 1 to 3, wherein zooming the cached wide-angle image comprises:
cropping the cached wide-angle image based on a zoom ratio to obtain a cropped image (S141');
stretching and zooming in the cropped image for being displayed on the displayer, to acquire a stretched and cropped image (S142'); and
controlling the displayer to display the cropped and stretched image (S143').

5. The control method according to any one of claims 1 to 4, wherein closing the wide-angle camera comprises keeping the wide-angle camera in a power-on state without performing operations, and
closing the telephoto camera comprises keeping the telephoto camera in a power-on state without performing operations.

6. A control device, configured for controlling an electronic device, wherein the electronic device comprises an imaging device (20), a displayer (30) and an input device (40), the imaging device (20) comprises a wide-angle camera (21) and a telephoto camera (22), a field of view of the telephoto camera (22) is within a field of view of the wide-angle camera (21), and the control device comprises:
a first control module (12), configured to control the displayer to display a cached wide-angle image output by the wide-angle camera as a preview image;
a first determining module (13), configured to process a user input of the input device to determine whether to zoom the preview image;
a second determining module (14), configured to determine whether a predetermined condition is satisfied during zooming the preview image, wherein the predetermined condition comprises a zoom ratio exceeding a predetermined zooming-in threshold, or an angle of view of the wide-angle camera being less than a predetermined angle of view;
a second control module (15), configured to start the telephoto camera and to control the displayer to display a cached telephoto image output by the telephoto camera as the preview image when the predetermined condition is satisfied;
being **characterized in**:
a closing module (16), configured to close the wide-angle camera after a predetermined period of time from starting the telephoto camera.

7. The control device according to claim 6, wherein the predetermined zooming-in threshold being less than a ratio of an angle of view of the wide-angle camera to an angle of view of the telephoto camera;
or
the predetermined angle of view being less than a maximum angle of view of the telephoto camera.

8. The control device according to any one of claims 6 to 7, further comprising:
a switching module (11), configured to start the wide-angle camera and to close the telephoto camera.

9. The control device according to any one of claims 6 to 8, wherein the second determining module (14) comprises:
a cropping unit (141'), configured to crop the cached telephoto image based on the zoom ratio to obtain a cropped image;
a stretching unit (142'), configured to stretch and zoom in the cropped image for being displayed on the displayer, so as to acquire a stretched and cropped image; and
a control unit (143'), configured to control the displayer to display the cropped and stretched image.

10. The control device according to any one of claims 6 to 9, wherein the closing module (16) is further configured to close the wide-angle camera to keep the wide-angle camera in a power-on state without performing operations; and the switching module (11) is further configured to close the telephoto camera to keep the telephoto camera in a power-on state without performing operations.

11. An electronic device, comprising:
an input device (40);
a displayer (30);
an imaging device (20); and
the control device (10) according to any one of claims 6 to 10.

12. The electronic device according to claim 11, wherein the electronic device comprises a mobile phone or a tablet computer and the imaging device (20) comprises front dual cameras or rear dual cameras.

13. The electronic device according to claim 11 or 12, wherein the imaging device (20) comprises a wide-angle camera (21) and a telephoto camera (22), and an angle of view of the wide-angle camera is from 70 degree to 90 degree, and an angle of view of the telephoto camera is from 20 degree to 60 degree.
